# EUROPÄISCHE PATENTANMELDUNG

(11) **EP 2 463 702 A1**
(43) Veröffentlichungstag der Anmeldung: **13.06.2012**
(21) Anmeldenummer: 11193052.5
(22) Anmeldetag: 12.12.2011
(51) Int. Cl.: G02B 21/24

(54) **Einrichtung und Verfahren zur justierten Anbringung eines Mikroskoptisches an einem Mikroskopstativ**

(30) Priorität: 10.12.2010 DE 102010061166
(71) Anmelder: Leica Microsystems CMS GmbH, 35578 Wetzlar (DE)
(72) Erfinder: Seifert, Roland, 69115 Heidelberg (DE)
(74) Vertreter: Schaumburg, Thoenes, Thurn, Landskron, Eckert

(57) **Zusammenfassung**

Beschrieben sind eine Einrichtung und ein Verfahren zur justierten Anbringung eines Mikroskoptisches (14), an dem ein Objektiv (38) montiert ist, an einem Mikroskopstativ (12). Die Einrichtung ist versehen mit mindestens einem an dem Mikroskopstativ (12) angeordneten ersten Verbindungselement (56), mindestens einem an dem Mikroskoptisch (14) angeordneten zweiten Verbindungselement (62), das zur Anbringung des Mikroskoptisches (14) an dem Mikroskopstativ (12) mit dem ersten Verbindungselement (56) verbindbar ist, mindestens einem ersten Passteil (76), das an dem Mikroskopstativ (12) angeordnet ist, mindestens einem Positioniersockel (66), der an der dem Mikroskopstativ (12) zugewandten Unterseite einer Tischplatte (16) des Mikroskoptisches (12) angeordnet ist und ein zweites Passteil (74) trägt, das mit dem ersten Passteil (76) in Eingriff bringbar ist, wobei der Positioniersockel (66) zum Justieren der Tischplatte (16) auf dem Mikroskopstativ (12) mit in Eingriff gebrachten Passteilen (74, 76) in einer zur Tischplatte (16) parallelen Justierebene beweglich gelagert ist, und mindestens einer Arretiervorrichtung (80) zum Arretieren des Positioniersockels (66) an der justierten Tischplatte (16).

## Beschreibung

Die Erfindung betrifft eine Einrichtung und ein Verfahren zur justierten Anbringung eines Mikroskoptisches an einem Mikroskopstativ.

In jüngerer Vergangenheit wurden lichtmikroskopische Verfahren entwickelt, mit denen sich basierend auf einer sequentiellen, stochastischen Lokalisierung von einzelnen Punktobjekten, insbesondere Fluoreszenzmolekülen, Bildstrukturen darstellen lassen, die kleiner sind als die beugungsbedingte Auflösungsgrenze klassischer Lichtmikroskope. Solche Verfahren sind beispielsweise beschrieben in WO 2006/127692 A2; DE 10 2006 021 317 B3; WO 2007/128434 A1, US 2009/0134342 A1; DE 10 2008 024 568 A1; "Sub-diffraction-limit imaging by stochastic optical reconstruction microscopy (STORM)", Nature Methods 3, 793-796 (2006), M. J. Rust, M. Bates, X. Zhuang; "Resolution of Lambda/10 in fluorescence microscopy using fast single molecule photo-switching", Geisler C. et al, Appl. Phys. A, 88, 223-226 (2007). Dieser neue Zweig der Mikroskopie wird auch als Lokalisierungsmikroskopie bezeichnet. Die angewandten Verfahren sind in der Literatur z.B. unter den Bezeichnungen (F)PALM ((Fluorescence) Photoactivation Localization Microscopy), PALMIRA (PALM with Independently Running Acquisition), GSD(IM) (Ground State Depletion (Individual Molecule return) Microscopy) oder (F)STORM ((Fluorescence) Stochastic Optical Reconstruction Microscopy) bekannt.

Den neuen Verfahren ist gemein, dass die abzubildenden Strukturen mit Markern präpariert werden, die über zwei unterscheidbare Zustände verfügen, nämlich einen "hellen" Zustand und einen "dunklen" Zustand. Werden beispielsweise Fluoreszenzfarbstoffe als Marker verwendet, so ist der helle Zustand ein fluoreszenzfähiger Zustand und der dunkle Zustand ein nicht fluoreszenzfähiger Zustand. Zur Abbildung von Bildstrukturen mit einer Auflösung, die kleiner als die klassische Auflösungsgrenze des abbildenden optischen Systems ist, wird nun wiederholt eine kleine Untermenge der Marker in den hellen Zustand präpariert und damit gleichsam aktiviert. Diese aktivierte Untermenge ist dabei so zu wählen, dass der mittlere Abstand benachbarter Marker im hellen Zustand größer ist als die Auflösungsgrenze des abbildenden optischen Systems. Die Luminanzsignale der aktivierten Untermenge werden auf einen räumlich auflösenden Lichtdetektor, z.B. eine CCD-Kamera, abgebildet. Von jedem Marker wird so ein Lichtfleck erfasst, dessen Größe durch die Auflösungsgrenze des abbildenden optischen Systems bestimmt ist.

Auf diese Weise wird eine Vielzahl von Rohdaten-Einzelbildern aufgenommen, in denen jeweils eine andere aktivierte Untermenge abgebildet ist. In einem Bildanalyse-Prozess werden dann in jedem Rohdaten-Einzelbild die Schwerpunkte der Lichtflecke bestimmt, die die im hellen Zustand befindlichen Marker darstellen. Die aus den Rohdaten-Einzelbildern ermittelten Schwerpunkte der Lichtflecke werden dann in einer Gesamtdarstellung zusammengetragen. Das durch diese Gesamtdarstellung entstehende hochaufgelöste Bild spiegelt die Verteilung der Marker wieder. Für eine repräsentative Wiedergabe der abzubildenden Struktur müssen ausreichend viele Signale detektiert werden. Da jedoch die Anzahl an Markern in der jeweils aktivierten Untermenge durch den minimalen mittleren Abstand, den zwei Marker im hellen Zustand voneinander haben dürfen, limitiert ist, müssen sehr viele Rohdaten-Einzelbilder aufgenommen werden, um die Struktur vollständig abzubilden. Typischerweise liegt die Anzahl an Rohdaten-Einzelbildern in einem Bereich von 10.000 bis 100.000.

Die für die Aufnahme eines Rohdaten-Einzelbildes benötigte Zeit ist nach unten hin durch die maximale Bildaufnahmerate des abbildenden Detektors limitiert. Dies führt zu vergleichsweise langen Gesamtaufnahmezeiten für eine für die Gesamtdarstellung benötigte Serie von Rohdaten-Einzelbildern. So kann die Gesamtaufnahmezeit bis zu einigen Stunden betragen.

Über diese lange Gesamtaufnahmezeit kann es nun zu einer Bewegung der abzubildenden Probe relativ zum bildgebenden optischen System kommen. Da für die Erstellung eines hochaufgelösten Gesamtbildes alle Rohdaten-Einzelbilder nach der Schwerpunktbestimmung zusammengeführt werden, verschlechtert jede Relativbewegung zwischen Probe und bildgebendem optischen System, die während der Aufnahme zweier aufeinanderfolgender Rohdaten-Einzelbilder auftritt, die Ortsauflösung des Gesamtbildes. In vielen Fällen rührt diese Relativbewegung von einer systematischen mechanischen Bewegung des Systems her, auch als mechanische Drift bezeichnet, die beispielsweise durch thermische Ausdehnung oder Schrumpfung, durch mechanische Verspannungen oder durch die Veränderung der Konsistenz von Schmiermitteln, die in den mechanischen Komponenten verwendet werden, verursacht wird.

In den vorstehend beschriebenen hochauflösenden Verfahren ist es von besonderer Bedeutung, für eine driftfreie Positionierung des das abbildende System bildenden Objektivs relativ zu der auf der Tischplatte angeordneten Probe zu sorgen. Dies kann dadurch erreicht werden, dass das Objektiv nicht wie üblich an einem Objektivrevolver, sondern direkt an der Tischplatte montiert wird. Bei einer solchen Ausgestaltung ist das Objektiv an der der Probe abgewandten Unterseite der Tischplatte im Bereich einer in der Tischplatte ausgebildeten Durchgangsöffnung angeordnet und bildet die Probe, die an einem auf der oberen Seite der Tischplatte aufliegenden Probenträger angeordnet ist, durch die Durchgangsöffnung hindurch ab. In Folge der direkten Anbringung des Objektivs an der Tischplatte ist die Strecke, über die das Objektiv mit dem Probenträger mechanisch gekoppelt ist, vergleichsweise kurz, wodurch eine zwischen dem Objektiv und dem Probenträger auftretende mechanische Drift weitgehend vermieden werden kann.

Ist das Objektiv direkt an dem Mikroskoptisch montiert, so gestaltet sich jedoch die Ausrichtung des Objektivs auf die optische Achse des Mikroskopstativs vergleichsweise aufwändig. So muss der Mikroskoptisch jedes Mal, nachdem er beispielsweise zu Reparaturzwecken von dem Mikroskopstativ abgenommen worden ist, von neuem relativ zu dem Mikroskopstativ justiert werden. Dies ist mühsam und fehleranfällig.

Aus der US 3 572 889 A ist ein Mechanismus bekannt, der der justierten Schnellmontage unterschiedlicher Mikroskoptische an einem Mikroskopstativ dient. Dieser Mechanismus umfasst eine Justiereinheit, die aus einem Befestigungsbügel und einer Montageplatte gebildet ist, die an der Rückseite des Befestigungsbügels angeordnet ist. Die Montageplatte ist an einem Gleitelement befestigt, das vertikal verschiebbar an dem Mikroskopstativ angeordnet ist. Der Mikroskoptisch ist mit dem Befestigungsbügel gekoppelt. Die Montageplatte und der Befestigungsbügel weisen Anlageflächen auf, die ein Verschieben der Montageplatte relativ zu dem Befestigungsbügel ermöglichen.

In der US 2005/0083569 A1 ist ein Mikroskop beschrieben, das eine Fokussiersäule, einen Tisch und einen Mechanismus aufweist, der das Lösen der Fokussiersäule von dem Tisch ermöglicht. Dieser Mechanismus umfasst einen an der Fokussiersäule angebrachten Gewindeschaft und ein mit einem passenden Gewinde versehendes Rändelrad, das innerhalb des Tisches gedreht werden kann, um die Fokussiersäule an dem Tisch zu koppeln und von diesem zu lösen.

Der Erfindung liegt die Aufgabe zu Grunde, für die hochauflösende Lichtmikroskopie eine Einrichtung und ein Verfahren anzugeben, die es ermöglichen, einen Mikroskoptisch, an dem ein Objektiv montiert ist, in einfacher und reproduzierbarer Weise justiert an einem Mikroskopstativ anzubringen.

Die Erfindung löst diese Aufgabe nach Anspruch 1 durch eine Einrichtung mit mindestens einem an dem Mikroskopstativ angeordneten ersten Verbindungselement, mindestens einem an dem Mikroskoptisch angeordneten zweiten Verbindungselement, das zur Anbringung des Mikroskoptisches an dem Mikroskopstativ mit dem ersten Verbindungselement verbindbar ist, mindestens einem ersten Passteil, das an dem Mikroskopstativ angeordnet ist, mindestens einem Positioniersockel, der an der dem Mikroskopstativ zugewandten Unterseite einer Tischplatte des Mikroskoptisches angeordnet ist und ein zweites Passteil trägt, das mit dem ersten Passteil in Eingriff bringbar ist, wobei der Positioniersockel zum Justieren der Tischplatte auf dem Mikroskopstativ mit in Eingriff gebrachten Passteilen in einer zur Tischplatte parallelen Justierebene beweglich gelagert ist, und mindestens einer Arretiervorrichtung zum Arretieren des Positioniersockels an der justierten Tischplatte.

Die Erfindung sieht also vor, die Tischplatte in der Justierebene auf dem Mikroskopstativ zu verschieben, während sich ein an der Unterseite der Tischplatte angeordneter Positioniersockel über die ineinander greifenden Passteile in passgenauer Verbindung zu dem Mikroskopstativ befindet. Hierzu ist der Positioniersockel in der Justiereben beweglich gelagert. Diese Art der Lagerung kann auch als "schwimmend" bezeichnet werden.

Nach Erreichen der gewünschten Positionierung der Tischplatte auf dem Mikroskopstativ, in der das an der Tischplatte montierte Objektiv präzise auf die optische Achse des Mikroskopstativs ausgerichtet ist, wird der Positioniersockel und damit das an diesem gehaltene Passteil mittels der Arretiervorrichtung an der Tischplatte festgesetzt. Damit ist die justierte Positionierung der Tischplatte auf dem Mikroskopstativ reproduzierbar festgelegt. Wird der Mikroskoptisch beispielsweise zu Reparaturzwecken von dem Mikroskoptisch abgenommen, so wird anschließend einfach wieder so auf das Mikroskopstativ aufgesetzt, dass die Passteile ineinander greifen. Eine nochmalige Justage ist nicht erforderlich.

In einer vorteilhaften Weiterbildung ist an der Unterseite der Tischplatte eine Sockelaufnahme ausgebildet, in welcher der Positioniersockel mit einem Spiel in der Justierebene angeordnet ist. An der von dem Mikroskopstativ abgewandten Oberseite der Tischplatte ist mindestens ein Einsetzloch ausgebildet ist, das in die Sockelaufnahme mündet. In dem Positioniersockel ist mindestens eine Ausnehmung ausgebildet, die über den gesamten Bereich, in dem der Positioniersockel infolge seines Spiels in der Justierebene beweglich ist, mit dem Einsetzloch in Verbindung steht. Die Arretiervorrrichtung umfasst eine Klemme mit einem in der Sockelaufnahme sitzenden ersten Klemmelement und einem in dem Einsetzloch sitzenden zweiten Klemmelement, das an dem ersten Klemmelement festziehbar ist, um den in der Sockelaufnahme angeordneten Positioniersockel zwischen den beiden Klemmelementen zu arretieren.

Der in dem Einsetzloch oder der in der Ausnehmung des Positioniersockels angeordnete Teil der Klemme weist ein Spiel in der Justierebene auf. In dieser Ausgestaltung ist der Positioniersockel in der in der Tischplatte ausgebildeten Ausnehmung schwimmend gelagert. Dadurch kann die Tischplatte auf dem Mikroskopstativ verschoben werden, während der Positioniersockel fest auf dem Mikroskopstativ sitzt. Mittels der Klemme kann, sobald die Tischplatte justiert ist, der Positioniersockel in der Ausnehmung arretiert werden. Hierzu wird er zwischen den beiden Klemmteilen eingeklemmt. Da das erste Klemmelement in dem an der Oberseite der Tischplatte ausgebildeten Einsetzloch sitzt, ist es von oben her zugänglich. Dadurch kann der Positioniersockel bequem von oben arretiert werden, nachdem die gewünschte Justierung erzielt ist.

In einer bevorzugten Weiterbildung ist an dem Mikroskopstativ mindestens eine Positionierleiste angebracht, an dem das erste Verbindungselement und das erste Passteil angeordnet sind. Die Positionierleiste kann beispielsweise über Standardbefestigungslöcher, die an dem Mikroskopstativ zur Anbringung des Mikroskoptisches ohnehin schon vorhanden sind, montiert werden. Die Positionierleiste definiert so eine Schnittstelle für die miteinander in Eingriff zu bringenden Passteile. Es versteht sich von selbst, dass die erfindungsgemäße Justiereinrichtung auch ohne eine solche Schnittstelle auskommt. In diesem Fall ist das erste Passteil direkt an dem Mikroskopstativ vorzusehen.

Weitere vorteilhafte Ausgestaltungen sind den Unteransprüchen sowie der folgenden Beschreibung zu entnehmen.

Nach einem weiteren Aspekt der Erfindung ist ein Verfahren zur justierten Anbringung eines Mikroskoptisches an einem Mikroskopstativ gemäß Anspruch 9 vorgesehen.

Die Erfindung wird im Folgenden anhand eines Ausführungsbeispiels unter Bezugnahme auf die Figuren näher erläutert. Darin zeigen:
- Figur 1: eine perspektivische Ansicht eines hochauflösenden Lichtmikroskops als Ausführungsbeispiel;
- Figur 2: eine perspektivische Ansicht des Lichtmikroskops mit abgehobenem Mikroskoptisch;
- Figur 3: eine perspektivische Unteransicht des Mikroskoptisches;
- Figur 4: eine aufgebrochene Ansicht des Mikroskoptisches zur Veran schaulichung der die erfindungsgemäße Justiereinrichtung bil denden Komponenten;
- Figur 5: eine weitere Ansicht des Mikroskoptisches, in der die Justiereinrichtung teilweise im Schnitt dargestellt ist;
- Figur 6: eine Ansicht, in der ein Teil der Figur 5 vergrößert dargestellt ist;
- Figur 7: weitere der Figur 6 entsprechende Ansichten, die verschiedene Justierzustände zeigen; und
- Figur 8: eine Ansicht des Mikroskoptisches, welche die Positioniersockel und die Arretierklemmen von unten gezeigt sind.

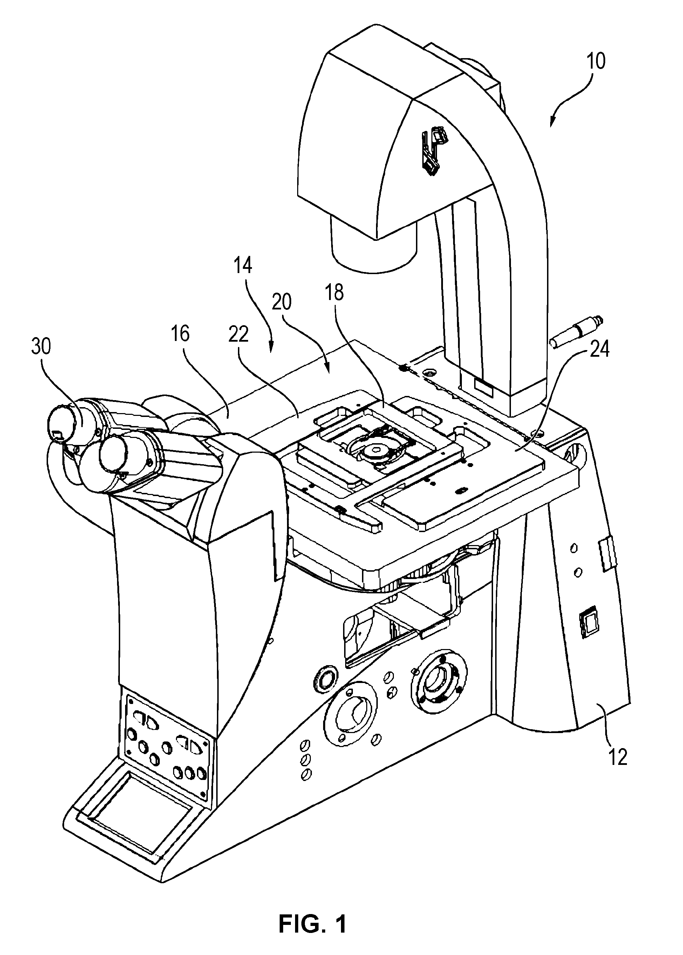

Im Folgenden wird zunächst der Gesamtaufbau eines hochauflösenden Lichtmikroskops 10 unter Bezugnahme auf die Figuren 1 bis 3 erläutert. Dabei werden nur diejenigen Komponenten des Lichtmikroskops 10 beschrieben, die für das Verständnis der vorliegenden Erfindung benötigt werden.

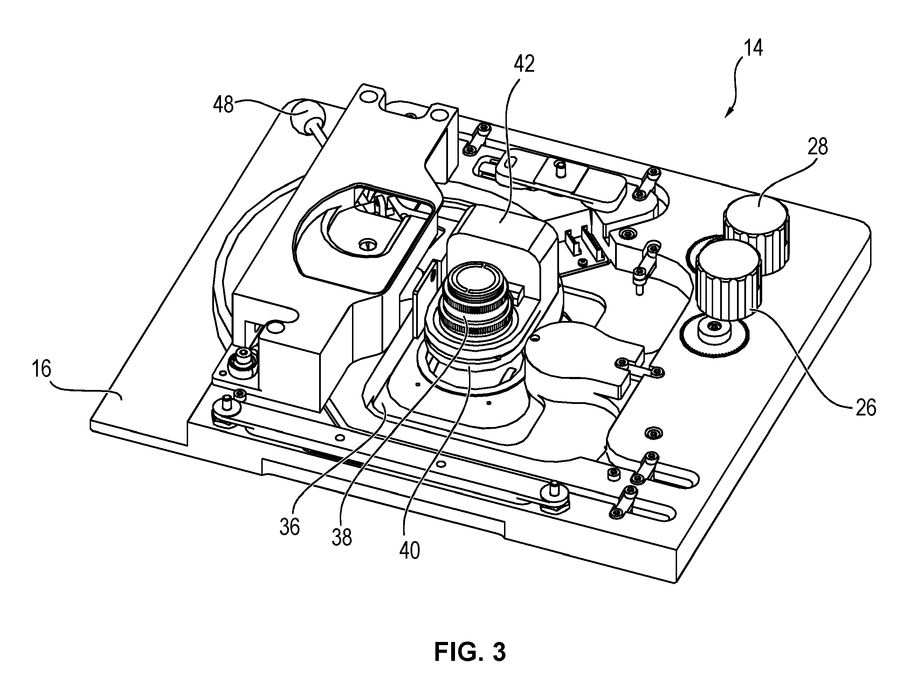

Das Lichtmikroskop 10 weist ein Mikroskopstativ 12 auf, auf das ein Mikroskoptisch 14 geschraubt ist. Der Mikroskoptisch 14 hat eine Tischplatte 16, auf der ein Probenträger 18 aufliegt. Auf der Tischplatte 16 befindet sich eine allgemein mit 20 bezeichnete Positioniereinrichtung, die aus einem ersten Schieber 22 und einem zweiten Schieber 24 gebildet ist. Die beiden Schieber 22 und 24 sind mechanisch voneinander entkoppelt und dienen dazu, den Probenträger 18 auf der Tischplatte 16 in zwei zueinander senkrechten Richtungen zu verschieben. Hierzu sind an der Unterseite der Tischplatte 16 zwei Handräder 26 und 28 angebracht, wie in Figur 3 gezeigt ist.

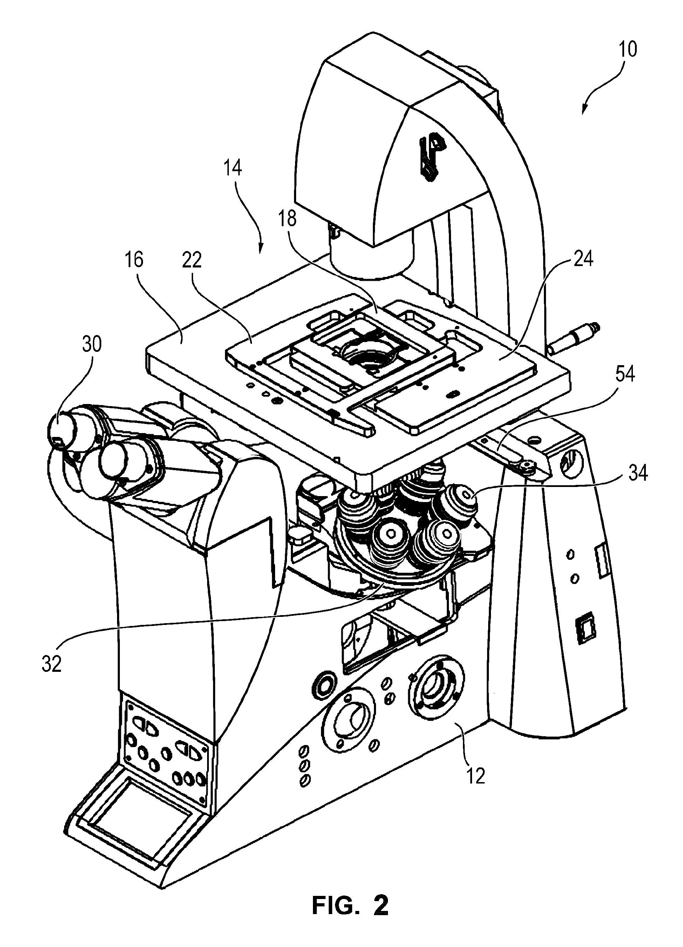

Das Lichtmikroskop 10 weist ferner ein an dem Mikroskopstativ 12 angebrachtes Paar Okulare 30 sowie einen Objektivrevolver 32 auf, der mehrere Mikroskopobjektive 34 hält. In der Darstellung nach Figur 2, die das Lichtmikroskop 10 mit von dem Mikroskopstativ 12 abgezogenem Mikroskoptisch 14 zeigt, ist der Objektivrevolver 32 zu erkennen, der ansonsten durch den Mikroskoptisch 14 verdeckt ist.

Wie die Unteransicht nach Figur 3 zeigt, ist an der Unterseite der Tischplatte 16 unterhalb einer in der Tischplatte 16 ausgebildeten Durchgangsöffnung 36 ein Objektiv 38 angeordnet. Das Objektiv 38 ist über ein Objektivgewinde in einen Fokussierantrieb 40 geschraubt. Der Fokussierantrieb 40 ist beispielsweise ein piezokeramischer Aktor, der das Objektiv 38 zur Fokussierung auf die abzubildende Probe längs dessen optischer Achse bewegt. Der Fokussierantrieb 40 ist an einer unterhalb der Tischplatte 16 verschwenkbaren Halterung 42 angebracht. Mittels eines Schwenkhebels 48 kann die Halterung 42 mitsamt dem Objektiv 38 in den Abbildungsstrahlengang des Lichtmikroskops 10 eingeschwenkt und aus diesem ausgeschwenkt werden.

Infolge der direkten Anbringung des Objektivs 38 an der Tischplatte 16 ist die Strecke, über die das Objektiv 38 mit dem Probenträger 18 mechanisch gekoppelt ist, vergleichsweise kurz. Dadurch kann das Auftreten einer mechanischen Drift zwischen dem Objektiv 38 und dem Probenträger 18 weitgehend vermieden werden.

Um eine hochauflösende Abbildung der Probe durch das Objektiv 38 zu gewährleisten, muss sichergestellt sein, dass der das Objektiv 38 tragende Mikroskoptisch 14 exakt auf dem Mikroskopstativ 12 positioniert ist. Insbesondere muss das Objektiv 38 präzise auf die optische Achse des Mikroskopstativs 12 ausgerichtet sein.

Die im Folgenden beschriebene Justiereinrichtung ermöglicht es, den Mikroskoptisch 14 präzise justiert an dem Mikroskopstativ 12 zu montieren. Insbesondere ist es mittels der Justiereinrichtung möglich, den Mikroskoptisch 14, nachdem er beispielsweise zu Reparaturzwecken von dem Mikroskopstativ 12 abgenommen worden ist (vgl. Figur 2), wieder an dem Mikroskopstativ 12 anzubringen, ohne ihn erneut justieren zu müssen.

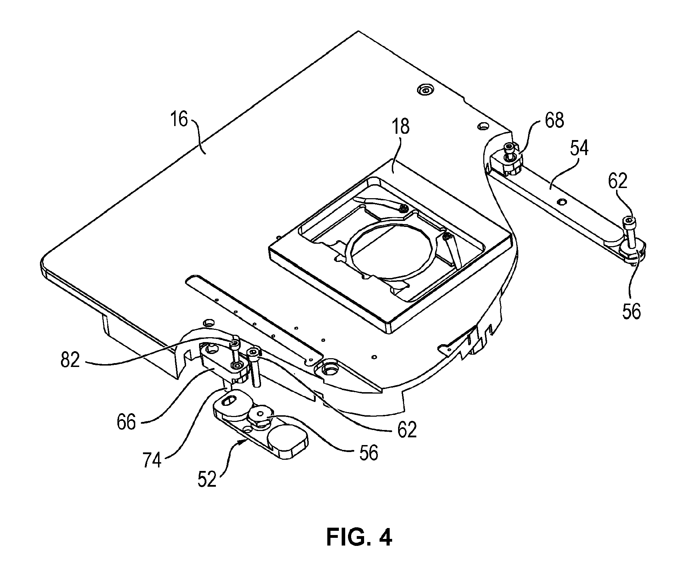

Wie in der aufgebrochenen Ansicht nach Figur 4 gezeigt, umfasst die Justiereinrichtung zwei Positionierleisten 52 und 54, die an dem Mikroskopstativ 12 angebracht werden. In der Ansicht nach Figur 2 ist die an dem Mikroskopstativ 12 montierte Positionierleiste 54 teilweise zu sehen. Die Positionierleisten 52 und 54 werden an Standardschraublöchern befestigt, die an dem Mikroskopstativ 12 ohnehin schon vorhanden sind, um dem Mikroskoptisch 14 (ohne die erfindungsgemäße Justiereinrichtung) an dem Mikroskopstativ 12 zu montieren.

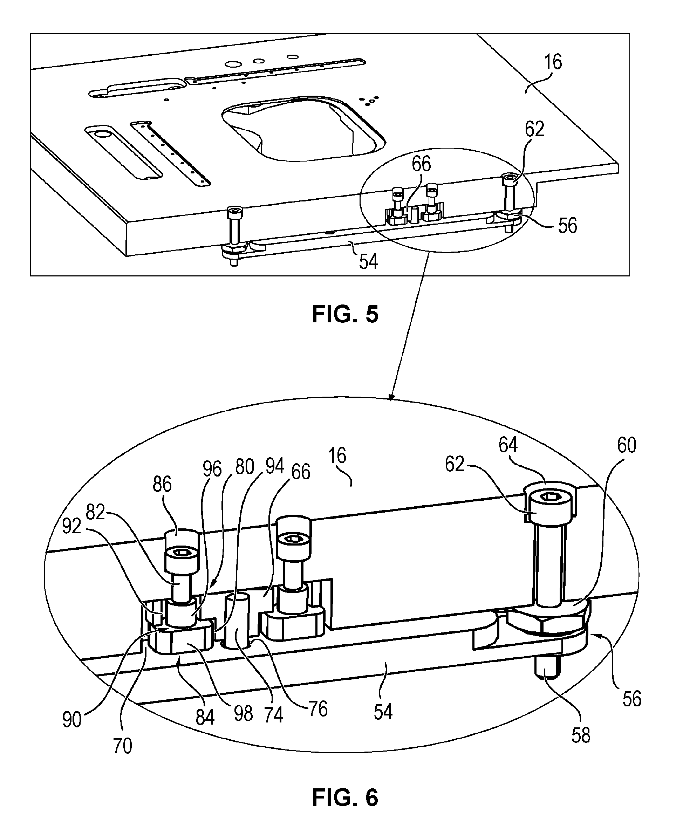

Die Positionierleisten 52 und 54 werden jeweils über zwei Schraubsockel 56, die in die vorstehend genannten Standardschraublöcher eingeschraubt werden, an dem Mikroskopstativ 12 montiert. Wie in der vergrößerten Ansicht nach Figur 6 gezeigt ist, weisen die Schraubsockel 56 jeweils einen Gewindeschaft 58, der in das zugehörige Standardschraubloch des Mikroskopstativs 12 geschraubt ist, sowie eine Mutter 60 auf. Die Mutter 60 hat ein Innengewinde, in das eine Befestigungsschraube 62 geschraubt werden kann, um die Tischplatte 16 des Mikroskoptisches 14 auf der jeweiligen Positionierleiste 52 bzw. 54 zu montieren. Hierzu sind in der Tischplatte 16 Durchgangslöcher 64 ausgebildet, in welche die Befestigungsschrauben 62 eingesetzt werden können.

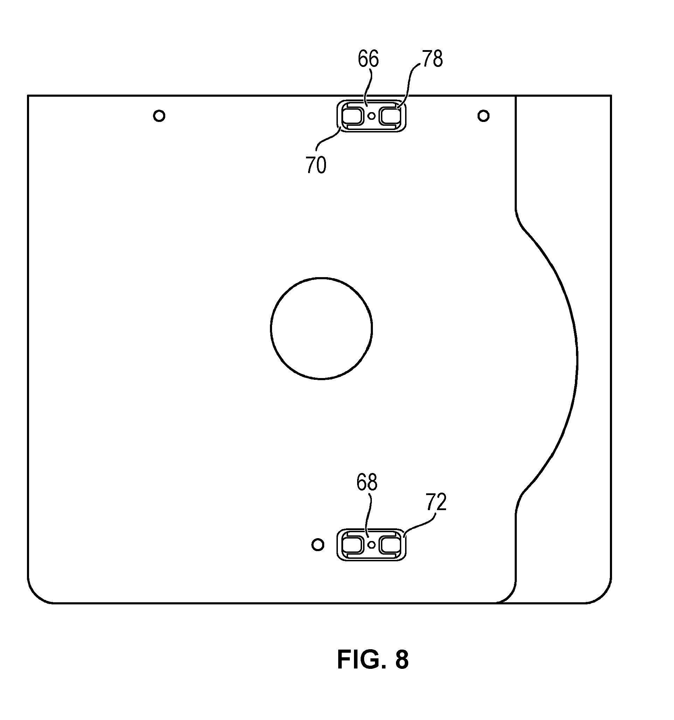

Die erfindungsgemäße Justiereinrichtung weist ferner zwei Positioniersockel 66 und 68 auf, die den beiden Positionierleisten 52 bzw. 54 zugeordnet sind. Wie in der Unteransicht nach Figur 8 zu sehen ist, sind die Positioniersockel 66 und 68 in Sockelaufnahmen 70 bzw. 72 angeordnet, die in der Unterseite der Tischplatte 16 ausgebildet sind. Da die beiden Positioniersockel 66 und 68 bau- und funktionsgleich sind, werden im Folgenden lediglich der Positioniersockel 66 und die mit ihm zusammenwirkenden Komponenten im Einzelnen beschrieben.

Wie der vergrößerten Darstellung nach Figur 6 zu entnehmen ist, trägt der Positioniersockel 66 einen Passstift 74, der in Eingriff mit einem Passloch 76 gebracht werden kann, das in der Positionierleiste 54 ausgebildet ist. Dabei greifen der Passstift 74 und das Passloch 76 passgenau, d.h. weitgehend spielfrei ineinander.

Der Positioniersockel 66 ist schwimmend in der Sockelaufnahme 70 gelagert. Dies bedeutet, dass der Positioniersockel 66 (im nicht arretierten Zustand) innerhalb der Sockelaufnahme 70 in einer zur Tischplatte 16 parallelen Justierebene beweglich ist. Befinden sich der Passstift 74 und das Passloch 76 in Eingriff, so kann deshalb die Tischplatte 16 in der Justierebene relativ zu dem Positioniersockel 60 und damit zu dem Mikroskopstativ 12 bewegt werden. Diese Bewegungsfreiheit der Tischplatte 16 wird genutzt, den Mikroskoptisch 14 mitsamt dem an ihm gehaltenen Objektiv 38 präzise auf die optische Achse des Mikroskopstativs 12 auszurichten.

Ist der Mikroskoptisch 14 einmal an dem Mikroskopstativ 12 justiert, so kann der zuvor bewegliche Positioniersockel 66 nun mittels zweier baugleicher Arretierklemmen 80 in der Sockelaufnahme 70 arretiert werden, um so die Tischplatte 16 bezüglich der Positionierleiste 54 zu fixieren. Wie in Figur 6 gezeigt, sind die beiden Arretierklemmen 80 baugleich. Deshalb wird im Folgenden lediglich die Figur 6 linke Arretierklemme 80 im Einzelnen beschrieben.

Die Arretierklemme 80 umfasst eine Klemmschraube 82 und eine mit dieser verschraubte Klemmmutter 84. Die Klemmschraube 82 sitzt in einem Einsetzloch 86, das in der Tischplatte 16 ausgebildet ist und von oben in die Sockelaufnahme 70 mündet. Die Klemmmutter 84 ist in der Sockelaufnahme 70 angeordnet.

Der Positioniersockel 66 weist auf beiden Seiten des Passstiftes 74 zwei Ausnehmungen 90 auf. In der Querschnittsansicht nach Figur 6 sind die Ausnehmungen 90 jeweils stufig ausgebildet. Jede Ausnehmung 90 setzt sich aus einem Verbindungsabschnitt 92, der mit dem zugehörigen Einsetzloch 86 in Verbindung steht, und einem der Positionierleiste 54 zugewandten Anlageabschnitt 94 zusammen. In diesen beiden Abschnitten 92 und 94 der Ausnehmung 90 ist die Klemmmutter 84 angeordnet. So weist die Klemmmutter 84 einen zylindrischen Kopplungsteil 96, der in dem Verbindungsabschnitt 92 der Ausnehmung 90 angeordnet ist, sowie einen im Wesentlichen quaderförmigen Anlageteil 98 auf, der in dem Anlageabschnitt 94 der Ausnehmung 90 sitzt. Der Anlageteil 98 der Klemmmutter 84 ist gegenüber dem Kopplungsteil 96 aufgeweitet.

Der Kopplungsteil 96 der Klemmmutter 84 hat ein Innengewinde, in das die Klemmschraube 82 schraubbar ist. Wird die Klemmschraube 82 in dieses Innengewinde eingeschraubt, so zieht sie den Anlageteil 98 der Klemmmutter 84 an dem Anlageabschnitt 94 aus der Ausnehmung 90 fest. Dadurch wird der Positioniersockel 66 an der Tischplatte 16 arretiert.

In der in Figur 6 gezeigten Ausführungsform weist die Klemmmutter 84 im nicht arretierten Zustand ein Spiel in der Verstellebene auf, während die Klemmschraube 82 weitgehend spielfrei in der Einsetzbohrung 86 sitzt. Diese Ausführung ist jedoch nur beispielhaft zu verstehen. So ist es ebenso möglich, durch geeignete Dimensionierung des Einsetzloches 86 die Klemmschraube 82 mit einem Spiel zu versehen und die Klemmmutter 84 fest an dem Positioniersockel 66 anzuordnen. Zu Justierzwecken muss lediglich gewährleistet sein, dass der Positioniersockel 66 in der Sockelaufnahme 70 ein Spiel in der Verstellebene aufweist, damit die Tischplatte 16 relativ zu dem Positioniersockel 66, der durch den passgenau in das Passloch 76 greifenden Passstift 74 an der Positionierleiste 54 festgesetzt ist, verschoben werden kann.

Wie in Figur 6 ferner zu erkennen ist, ist auch die Befestigungsschraube in dem Durchgangsloch 64 so angeordnet, dass sie ein Spiel in der Verstellebene aufweist. Dieses Spiel muss so bemessen sein, dass sich die Befestigungsschraube 62 innerhalb des gesamten Bereichs, in dem die Tischplatte 16 zu Justierzwecken relativ zu dem Mikroskopstativ 12 bewegt wird, in die Mutter 60 einschrauben lässt.

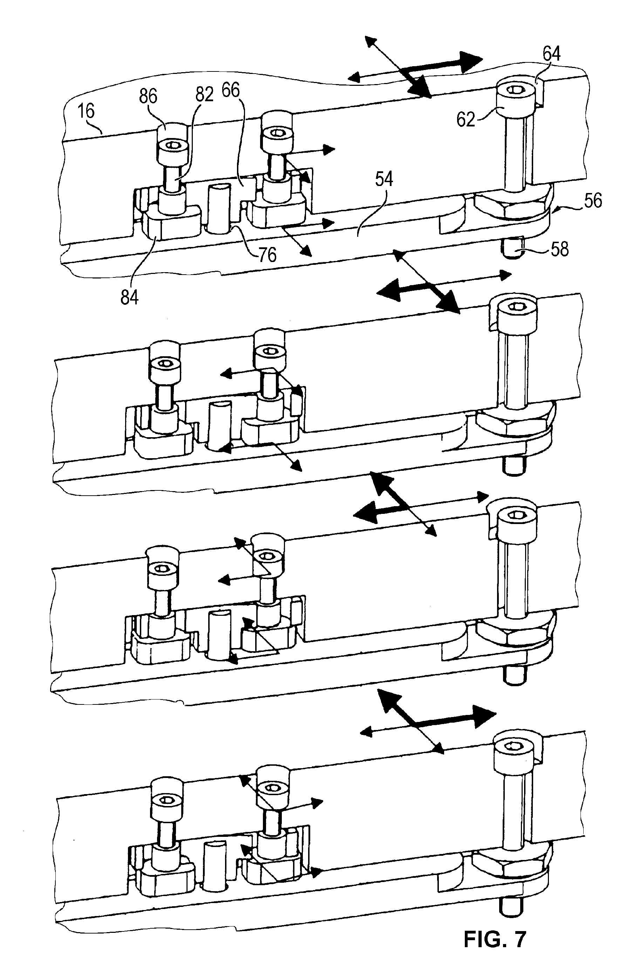

Die vorstehend erläuterten Zusammenhänge sind noch einmal in Figur 7 veranschaulicht, in denen verschieden Justierzustände gezeigt sind. Dabei deuten die Pfeile jeweils die Verschiebung der Tischplatte 16 auf der Positionierleiste 54 und damit auf dem Mikroskopstativ 12 an. Diese Verschiebungen spiegeln sich in entsprechenden Bewegungen der Arretierklemmen 80 innerhalb der Sockelaufnahme 70 relativ zu dem Positioniersockel 66 wieder.

Um den Mikroskoptisch 14 justiert an dem Mikroskopstativ 12 anzubringen, wird zunächst die Tischplatte 16 so auf die fest an dem Mikroskopstativ 12 montierten Positionierleisten 52, 54 aufgesetzt, dass die an den Positioniersockeln 66 vorhandenen Passstifte 74 in die ihnen zugeordneten, in den Positionierleisten 52, 56 ausgebildeten Passlöcher 76 greifen. Da die Passstifte 74 und die Passlöcher 76 weitgehend spielfrei ineinander greifen, befinden sich die Positioniersockel 66 und die Positionierleisten 52, 54 (und damit das Mikroskopstativ 12) in fester räumlicher Zuordnung zueinander. Dann wird die Tischplatte 16 auf den Positionierleisten 52, 54 in der Justierebene verschoben, bis das an der Tischplatte 16 montierte Objektiv 38 präzise an der optischen Achse des Mikroskopstativs ausgerichtet ist. Anschließend werden die Arretierklemmen 80 festgezogen, um die Positioniersockel 66 an der Tischplatte 16 festzusetzen. Damit sind die Passstifte 74 relativ zur Tischplatte 16 fixiert. Schließlich werden die Befestigungsschrauben 62 in die Schraubsockel 56 geschraubt.

Wird der justiert an dem Mikroskopstativ 12 montierte Mikroskoptisch 14 später beispielsweise zu Reparaturzwecken durch Lösen der Befestigungsschrauben 62 wieder abgenommen, so muss er bei seiner nächsten Anbringung nicht wieder justiert werden, da die Passstifte 74 korrekt positioniert an der Tischplatte 16 fixiert sind.

### Bezugszeichenliste

- 10: Lichtmikroskop
- 12: Mikro skop stativ
- 14: Mikroskoptisch
- 16: Tischplatte
- 18: Probenträger
- 20: Positioniereinrichtung
- 22: erster Schieber
- 24: zweiter Schieber
- 26, 28: Handrad
- 30: Okular
- 32: Objektivrevolver
- 34: Mikroskopobjektiv
- 36: Durchgangsöffnung
- 38: Objektiv
- 40: Fokussierantrieb
- 42: Halterung
- 48: Schwenkhebel
- 52, 54: Positionierleiste
- 56: Schraubsockel
- 58: Gewindeschaft
- 60: Mutter
- 62: Befestigungsschraube
- 64: Durchgangsloch
- 66, 68: Positioniersockel
- 70, 72: Sockelaufnahme
- 74: Passstift
- 76: Passloch
- 80: Arretierklemme
- 82: Klemmschraube
- 84: Klemmmutter
- 86: Einsetzloch
- 90: Ausnehmung
- 92, 94: Abschnitte
- 96: Kopplungsteil
- 98: Anlageteil

## Patentansprüche

1. Einrichtung zur justierten Anbringung eines Mikroskoptisches (14), an dem ein Objektiv (38) montiert ist, an einem Mikroskopstativ (12), mit mindestens einem an dem Mikroskopstativ (12) angeordneten ersten Verbindungselement (56),
mindestens einem an dem Mikroskoptisch (14) angeordneten zweiten Verbindungselement (62), das zur Anbringung des Mikroskoptisches (14) an dem Mikroskopstativ (12) mit dem ersten Verbindungselement (56) verbindbar ist,
mindestens einem ersten Passteil (76), das an dem Mikroskopstativ (12) angeordnet ist,
mindestens einem Positioniersockel (66), der an der dem Mikroskopstativ (12) zugewandten Unterseite einer Tischplatte (16) des Mikroskoptisches (12) angeordnet ist und ein zweites Passteil (74) trägt, das mit dem ersten Passteil (76) in Eingriff bringbar ist,
wobei der Positioniersockel (66) zum Justieren der Tischplatte (16) auf dem Mikroskopstativ (12) mit in Eingriff gebrachten Passteilen (74, 76) in einer zur Tischplatte (16) parallelen Justierebene beweglich an der Tischplatte (16) gelagert ist, und
mindestens einer Arretiervorrichtung (80) zum Arretieren des Positioniersockels (66) an der justierten Tischplatte (16).

2. Einrichtung nach Anspruch 1, **dadurch gekennzeichnet, dass**
an der Unterseite der Tischplatte (16) eine Sockelaufnahme (70) ausgebildet ist, in welcher der Positioniersockel (66) mit einem Spiel in der Justierebene angeordnet ist,
an der von dem Mikroskopstativ (12) abgewandten Oberseite der Tischplatte (16) mindestens ein Einsetzloch (86) ausgebildet ist, das in die Sockelaufnahme (70) mündet,
in dem Positioniersockel (66) mindestens eine Ausnehmung (90) ausgebildet ist, die über den gesamten Bereich, in dem der Positioniersockel (66) infolge seines Spiels in der Justierebene beweglich ist, mit dem Einsetzloch (86) in Verbindung steht,
die Arretiervorrichtung eine Klemme (80) mit einem in der Sockelaufnahme (70) sitzenden ersten Klemmelement (84) und einem in dem Einsetzloch (86) sitzenden zweiten Klemmelement (82) umfasst, das an dem ersten Klemmelement (84) festziehbar ist, um den in der Sockelaufnahme (70) angeordneten Positioniersockel (70) zwischen den beiden Klemmelementen (82, 84) zu arretieren, und
der in dem Einsetzloch (86) oder der in der Ausnehmung (90) des Positioniersockels (66) angeordnete Teil der Klemme (80) ein Spiel in der Justierebene aufweist.

3. Einrichtung nach Anspruch 2, **dadurch gekennzeichnet, dass** die Ausnehmung (90) des Positioniersockels (66) einen mit dem Einsetzloch (86) in Verbindung stehenden Verbindungsabschnitt (92) und einen dem Mikroskopstativ (12) zugewandten Anlageabschnitt (94) aufweist, der gegenüber dem Verbindungsabschnitt (92) aufgeweitet ist, und
das erste Klemmelement (84) einen in dem Verbindungsabschnitt (92) der Ausnehmung (90) des Positioniersockels (66) angeordneten Kopplungsteil (96), der mit dem zweiten Klemmelement (82) gekoppelt ist, und einen an den Kopplungsteil (96) anschließenden und gegenüber diesem aufgeweiteten Anlageteil (98) aufweist, der beim Festziehen der beiden Klemmelemente (82, 84) in Anlage mit dem Anlageabschnitt (94) der Ausnehmung (90) des Positioniersockels (66) kommt.

4. Einrichtung nach Anspruch 3, **dadurch gekennzeichnet, dass** der Kopplungsteil (96) zylindrisch und der Anlageteil (98) quaderförmig ist.

5. Einrichtung nach einem der Ansprüche 2 bis 4, **dadurch gekennzeichnet, dass** das erste Klemmelement (84) eine Mutter und das zweite Klemmelement (82) eine Schraube ist.

6. Einrichtung nach einem der vorhergehenden Ansprüche, **gekennzeichnet durch** mindestens eine an dem Mikroskopstativ (12) angebrachte Positionierleiste (52, 54), an dem das erste Verbindungselement (56) und das erste Passteil (76) angeordnet sind.

7. Einrichtung nach Anspruch 6, **dadurch gekennzeichnet, dass** das erste Verbindungselement mindestens einen Schraubsockel (56) umfasst, mit dem die Positionierleiste (52, 54) an dem Mikroskopstativ (12) angebracht ist, und
das zweite Verbindungselement eine Befestigungsschraube (62) umfasst, die in eine in der Tischplatte (16) ausgebildete Durchgangsbohrung (64) mit einem Spiel in der Justierebene einsetzbar und in den Schraubsockel (56) schraubbar ist.

8. Einrichtung nach Anspruch 7, **dadurch gekennzeichnet, dass** die miteinander in Eingriff bringbaren Passteile ein Passloch (76) und einen Passstift (74) umfassen.

9. Verfahren zur justierten Anbringung eines Mikroskoptisches (14), an dem ein Objektiv (38) montiert ist, an einem Mikroskopstativ (12), mit folgenden Schritten:
Versehen des Mikroskopstativs (14) mit einem ersten Passteil (76),
bewegliches Lagern mindestens eines ein zweites Passteil (74) tragenden Positioniersockels (66) an der dem Mikroskopstativ (12) zugewandten Unterseite einer Tischplatte (16) des Mikroskoptisches (14) in einer zur Tischplatte (16) parallelen Justierebene,
Ineingriffbringen des zweiten Passteils (74) mit dem ersten Passteil (76),
Justieren der Tischplatte (16) auf dem Mikroskopstativ (12),
Arretieren des Positioniersockels (66) an der justierten Tischplatte (16) und
Verbinden der Tischplatte (16) mit dem Mikroskopstativ (12).
